# EUROPÄISCHE PATENTSCHRIFT

(11) **EP 3 006 680 B1**
(45) Veröffentlichungstag und Bekanntmachung des Hinweises auf die Patenterteilung: **31.01.2018**
(21) Anmeldenummer: 15188713.0
(22) Anmeldetag: 07.10.2015
(51) Int. Cl.: F01D 21/04, F01D 25/16

(54) **FLUGGASTURBINENTRIEBWERK MIT STOSSDÄMPFUNGSELEMENT FÜR FANSCHAUFELVERLUST**
AIRCRAFT GAS TURBINE ENGINE WITH IMPACT-ABSORBING ELEMENT FOR FAN BLADE LOSS
TURBINE A GAZ VOLATIL DOTE D'UN ELEMENT AMORTISSEUR POUR PERTE DE PALE DE VENTILATEUR

(30) Priorität: 07.10.2014 DE 102014220317
(43) Veröffentlichungstag der Anmeldung: 13.04.2016
(73) Patentinhaber: Rolls-Royce Deutschland Ltd & Co KG, 15827 Blankenfelde-Mahlow (DE)
(72) Erfinder: ROSENAU, Knut, 15378 Herzfelde (DE); SINGH, Kai Navtej, 13467 Berlin (DE)
(74) Vertreter: Hoefer & Partner Patentanwälte mbB

(56) Entgegenhaltungen:
- EP-A2- 2 065 569
- GB-A- 2 394 015
- GB-A- 2 444 935
- US-A1- 2013 156 574

## Beschreibung

Die Erfindung bezieht sich auf ein Fluggasturbinentriebwerk gemäß den Merkmalen des Oberbegriffs des Anspruches 1.

Im Einzelnen bezieht sich die Erfindung auf ein Fluggasturbinentriebwerk mit einem Fan, welcher mehrere Fanschaufeln aufweist. Der Fan ist mittels eines Fanlagers an einer Triebwerkstruktur gelagert. Im Falle eines Verlustes einer Fanschaufel oder eines Teils einer Fanschaufel ergibt sich eine Unwuchtkraft, welche über das Fanlager in die Triebwerkstruktur eingeleitet wird.

Um die auftretenden Unwuchtkräfte aufnehmen oder kompensieren zu können, ist es aus dem Stand der Technik bekannt, im Bereich des Fanlagers zumindest eine Sollbruchstelle vorzusehen. Hierdurch ist es möglich, dass der Fan bzw. der Fanrotor um seinen neuen Schwerpunkt rotieren kann. Dabei werden die entstehenden Unwuchtkräfte jedoch ungedämpft in die Lagerstruktur und dann weiter in die Triebwerksaufhängung bzw. die Triebwerksstruktur und weiter in die Flugzeugstruktur eingeleitet. Hierbei treten nicht unerhebliche Belastungen auf, die bei der Auslegung der Triebwerks- und Flugzeugstruktur zu berücksichtigen sind.

Die EP 2 065 569 A2 zeigt ein Entkopplungssystem für einen Rotor einer Gasturbine. Dabei ist eine Sollbruchstelle vorgesehen, welche mehrere um den Umfang verteilt angeordnete Scherbolzen aufweist. Parallel wirkend zu der Sollbruchstelle ist ein ringförmiges Dämpfungselement aus einem Metallgewebe vorgesehen, welches im Normalbetrieb durch die vorgesehene Befestigungskonstruktion unbelastet ist.

Die GB 2 444 935 A beschreibt einen Rotor einer Gasturbine mit einer Sollbruchstelle. Die Konstruktion umfasst radial angeordnete Speichen, welche energieabsorbierend ausgebildet sind.

Eine weitere Vibrationsdämpfungsvorrichtung zeigt die GB 2 394 015 A. Dabei ist ein Lagergehäuse mittels eines energieabsorbierenden, federvorgespannten Elements eingebaut.

Der Erfindung liegt die Aufgabe zugrunde, ein Fluggasturbinentriebwerk der eingangs genannten Art zu schaffen, welches bei einfachem Aufbau und einfacher, kostengünstiger Herstellbarkeit die Nachteile des Standes der Technik vermeidet und insbesondere bei einer Unwucht des Fans die Einleitung von unerwünschten Kräften in die Triebwerksstruktur minimiert.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass parallel zu der zumindest einen Sollbruchstelle, welche im Bereich des Fanlagers ausgebildet ist, zumindest ein Stoßdämpfungselement vorgesehen ist.

Im Normalbetrieb des Fluggasturbinentriebwerkes werden Stöße und kleinere Unwuchten des Fans (Fanrotors) über das Fanlager in die Triebwerksstruktur eingeleitet. Derartige geringfügige Belastungen stören den normalen Betrieb nicht. Im Falle eines Fanschaufelverlustes, beispielsweise durch Vogelschlag oder ähnliches, ergibt sich jedoch ein neuer Schwerpunkt des Fans (Fanrotors), der in einem radialen Versatz zur Triebwerksachse liegt. Die dabei auftretende Unwuchtkraft zerstört die Sollbruchstellen am Fanlager. Erfindungsgemäß ist somit vorgesehen, dass die am Fanlager nach dem Fanschaufelverlust und dem Bruch der Sollbruchstellen auftretende Unwuchtkraft über das erfindungsgemäße Stoßdämpfungselement am Fanlager gedämpft wird. Dies führt zu einer erheblich geringeren Krafteinleitung auf die Fanlagerstruktur, die Triebwerksstruktur, die Triebwerksaufhängung und/oder die Flugzeugstruktur.

Dabei wird das Stoßdämpfungselement mit Öl aus der Lagerkammer gekühlt, wobei Überlauföl aus dem Fanlager radial in das Stoßdämpfungselement geleitet oder alternativ das Stoßdämpfungselement gesondert mit Sprühöl gekühlt werden kann. Die Temperaturreduzierung durch die Kühlung des Stoßdämpfungselements mit Öl kann zwischen 10°C und 50°C betragen.

Das erfindungsgemäße Stoßdämpfungselement ist parallel wirkend zu den Sollbruchstellen des Fanlagers angeordnet und dämpft somit die umlaufende Lastspitze des unwuchtigen Fanrotors. Das Stoßdämpfungselement dämpft dabei insbesondere im Moment des Fanschaufelverlusts und für eine anschließende Zeitspanne, bis der Fan (Fanrotor) an Drehzahl und damit an Energie und Unwuchtkraft verloren hat.

Die Erfindung ist in bevorzugter Weise bei bestehenden Triebwerkskonstruktionen einsetzbar, sie ist jedoch insbesondere auch bei Fluggasturbinen vorteilhaft anwendbar, welche ein erhöhtes Nebenstromverhältnis aufweisen. Auch bei Konstruktionen mit einem vergrößerten Fandurchmesser in Verbindung mit einer geringeren Anzahl an Fanschaufeln ist die Erfindung besonders vorteilhaft einsetzbar.

Ein weiterer Vorteil der erfindungsgemäßen Lösung besteht darin, dass insgesamt eine leichtere Konstruktion der gesamten Fanlagerstruktur, der Triebwerksstruktur, der Triebwerksaufhängung und/oder der Flugzeugstruktur ermöglicht wird.

Es ist vorgesehen, dass die Sollbruchstelle und das Stoßdämpfungselement an der radial äußeren, der Triebwerksstruktur zugewandten Seite des Fanlagers angeordnet sind. Hierdurch ergibt sich zum einen eine platzsparende Gesamtkonstruktion, zum anderen ist es möglich, die auftretenden Unwuchtkräfte effektiv zu dämpfen.

Das Stoßdämpfungselement ist erfindungsgemäß in Form eines gepressten Metallgewebedämpfers ausgebildet. Derartige Metallgewebedämpfer sind aus industriellen Anwendungen bekannt, beispielsweise für Transformatorenlager. Gepresste Metallgewebedämpfer können über einen großen Temperaturbereich mit geringer Varianz der Dämpfung eingesetzt werden.

Je nach Größe des erfindungsgemäßen Stoßdämpfungselements ist es möglich, zwischen 20% und 50% der Unwuchtkraft aufzunehmen. Die verbleibende Unwuchtkraft wird über eine umlaufende Durchbiegung der Fanwelle oder einer mit dieser verbundenen Niederdruckwelle mit geringer Dämpfung in die Struktur des Fluggasturbinentriebwerks eingeleitet. Durch die Dämpfung der Unwuchtkraft in dem erfindungsgemäßen Stoßdämpfungselement ergibt sich je nach Größe und Bauart des Stoßdämpfungselements eine Reduktion der in die Struktur eingeleiteten Unwuchtkraft zwischen 5% und 20% gegenüber einer Lösung gemäß dem Stand der Technik, bei welcher kein Stoßdämpfungselement verwendet wird.

Es ist vorgesehen, dass zwischen dem Fanlager und dem Stoßdämpfungselement ein radialer Spalt ausgebildet ist, welcher einen Luftspalt bildet. In einer ersten Ausgestaltung der Erfindung wird ein radialer Spalt von 1 mm bis 6 mm, vorzugsweise von 2 mm bis 5 mm, und besonders vorteilhaft von 3 mm vorgesehen. Durch diese Breite des Spaltes wird die Wärmeerzeugung und damit die Temperaturerhöhung im Stoßdämpfungselement auf 300°C bis 600°C, bevorzugt auf 400°C bis 500°C begrenzt, da das Stoßdämpfungselement im Wesentlichen nur im Moment des Fanschaufelverlustes und während des Durchfahrens von zumindest einer Resonanzfrequenz Dämpfungsarbeit verrichtet und sich nur dabei aufheizt.

In einer alternativen Ausgestaltung der Erfindung kann ein relativ großer Spalt von beispielsweise 6 mm bis 12 mm vorgesehen sein. Hierdurch wird eine Unwuchtlast unmittelbar nach einem Fanschaufelverlust wirksam gedämpft. Auch eine erhöhte Unwuchtlastspitze beim Durchlaufen einer Biegeeigenfrequenz bei einem Herunterfahren des Gasturbinentriebwerks oder nach dem Herunterfahren bei fortgesetztem Fliegen des Flugzeugs wird durch diese Maßnahme wirkungsvoll gedämpft.

Das Stoßdämpfungselement wird erfindungsgemäß als Metallgewebedämpfer ausgeführt, der eine progressive Federkennlinie aufweist, die bei geringer radialer Auslenkung des Fanrotors eine geringe Federkraft und Dämpfung und damit geringe Wärmeerzeugung aufweist, aber bei hoher radialer Auslenkung des Fanrotors eine hohe Federkraft und Dämpfung und damit hohe Wärmeerzeugung aufweist. Somit können hohe radiale Auslenkungen des Fanrotors im Moment des Fanschaufelverlustes und beim Durchfahren von Resonanzfrequenzen wirksam gedämpft, aber die Wärmeerzeugung im Stoßdämpfungselement in allen anderen Zeitabschnitten vermieden oder zumindest auf ein geringes Maß begrenzt werden.

In einer weiteren alternativen Ausgestaltung der Erfindung kann das Stoßdämpfungselement als Kombination von zumindest zwei Stoßdämpfungselementen mit unterschiedlicher Dämpfungscharakteristik ausgeführt sein, wobei das radial innere Stoßdämpfungselement eine geringere Federsteifigkeit aufweist als das radial äußere Stoßdämpfungselement.

In einer weiteren alternativen Ausgestaltung der Erfindung kann das Stoßdämpfungselement als Metallgewebedämpfer mit von radial innen nach radial außen anwachsender Federsteifigkeit ausgebildet sein. Dies kann durch von radial innen nach radial außen ansteigende Verpressung des Metallgewebes erreicht werden.

Der Begriff radial bezieht sich auf die Triebwerksachse des Fluggasturbinentriebwerks.

In einer weiteren alternativen Ausgestaltung der Erfindung kann das Stoßdämpfungselement als Kombination eines Stoßdämpfungselementes mit einem plastisch deformierenden Bauelement ausgebildet sein. Das plastisch deformierende Bauelement nimmt dabei einen Teil der unmittelbar nach einem Fanschaufelverlust auftretenden Unwuchtkraft mittels plastischer Deformation auf.

In einer bevorzugten Ausgestaltung der Erfindung ist weiterhin vorgesehen, dass im Bereich des Stoßdämpfungselements, der Fanlagerstruktur oder der Triebwerkstruktur zumindest ein Beschleunigungsaufnehmer angeordnet ist, welcher mit einer Triebwerkssteuerung verbunden ist. Über den Beschleunigungsaufnehmer kann ein Fanschaufelverlust erkannt werden, der nachfolgend zur Abschaltung des Triebwerks führt. Das Stoßdämpfungselement kann dabei für einen Kurzzeitbetrieb ausgelegt werden, bis eine hinreichende Reduktion der Fandrehzahl und der damit in die Triebwerksstruktur eingeleiteten Unwuchtkraft aufgetreten ist. Beim Herunterlauf des Triebwerks oder nach dem Herunterlauf des Fanrotors auftretende große Schwingungsamplituden können hierdurch optional zusätzlich durch das Stoßdämpfungselement gedämpft werden.

Die am Fanlager nach einem Fanschaufelverlust auftretende Unwuchtkraft wird somit durch das erfindungsgemäße Stoßdämpfungselement am Fanlager selbst gedämpft. Ein mit dem Fan/Fanrotor verbundener Niederdruckrotor wird dabei über ein nachgeordnetes Lager des Niederdruckrotors in der Triebwerksachse zentriert.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine schematische Detailansicht einer Ausgestaltung des Fanlagers gemäß dem Stand der Technik,
- Fig. 3 und 4: Darstellungen analog Fig. 2, in abgewandelten Ausführungsbeispielen der Erfindung,
- Fig. 5: eine schematische Darstellung eines Stoßdämpfungselements,
- Fig. 6: eine schematische Darstellung eines Stoßdämpfungselements als Kombination zweier Stoßdämpfungselemente mit unterschiedlicher Dämpfungscharakteristik, und
- Fig. 7: eine schematische Darstellung eines Stoßdämpfungselements in Kombination mit einem plastisch deformierenden Bauelement.

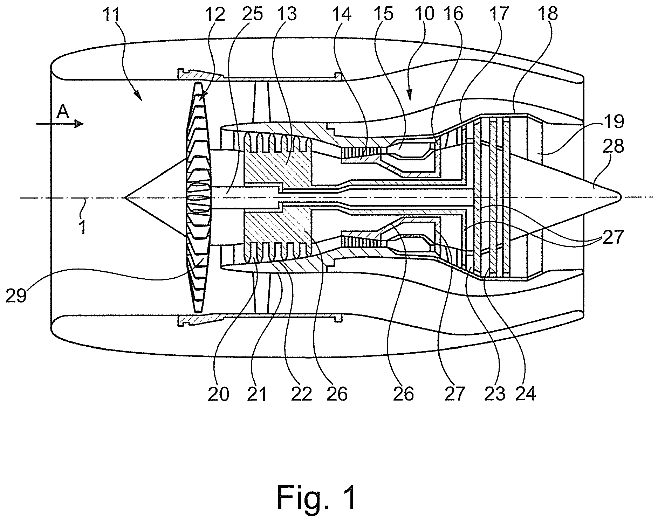

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

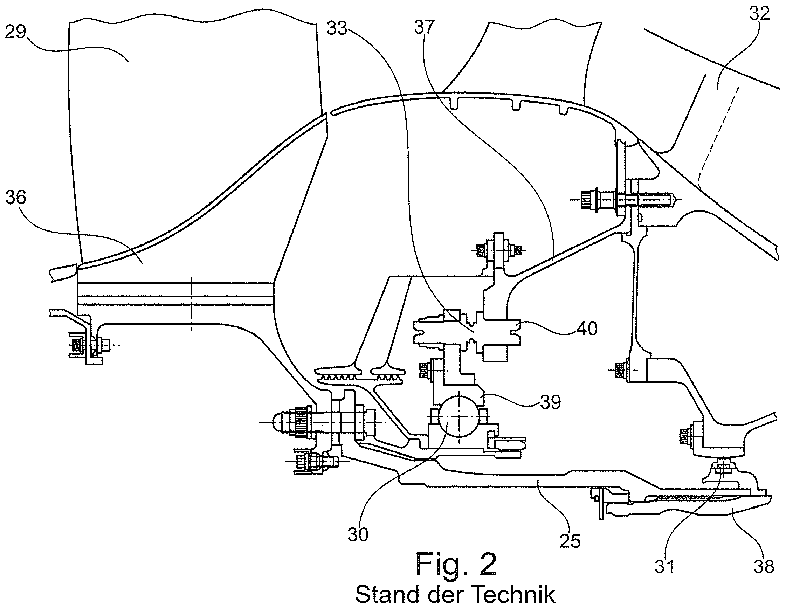

Die Fig. 2 zeigt eine Ausgestaltung gemäß dem Stand der Technik. Dabei ist in vereinfachter Darstellung ein Fanrotor 36 dargestellt, an welchem in üblicher Weise Fanschaufeln 29 befestigt sind. Der Fanrotor 36 ist mit einer Fanwelle 25 verbunden, welche über ein Fanlager 30 an einer Fanlagerstruktur 37 und damit an einer Triebwerksstruktur 32 gelagert ist. Am, in Strömungsrichtung gesehen, hinteren Endbereich der Fanwelle 25 ist diese mit einer Niederdruckwelle 38 (Niederdruckrotor) verbunden, welche mittels eines Lagers 31 an der Triebwerksstruktur 32 gelagert ist. Die Fig. 2 zeigt die Ausgestaltung gemäß dem Stand der Technik in vereinfachter, schematischer Darstellung.

Ein äußerer Lagerring 39 ist über ein Kopplungselement 40 mit der Fanlagerstruktur 37 verbunden. Das Kopplungselement 40 weist zumindest eine Sollbruchstelle 33 auf, welche im Falle einer auftretenden Unwucht, beispielsweise durch einen Fanschaufelverlust, bricht. Hierdurch kann der Fanrotor 36 um einen neuen, sich aus der Unwucht ergebenden Schwerpunkt rotieren.

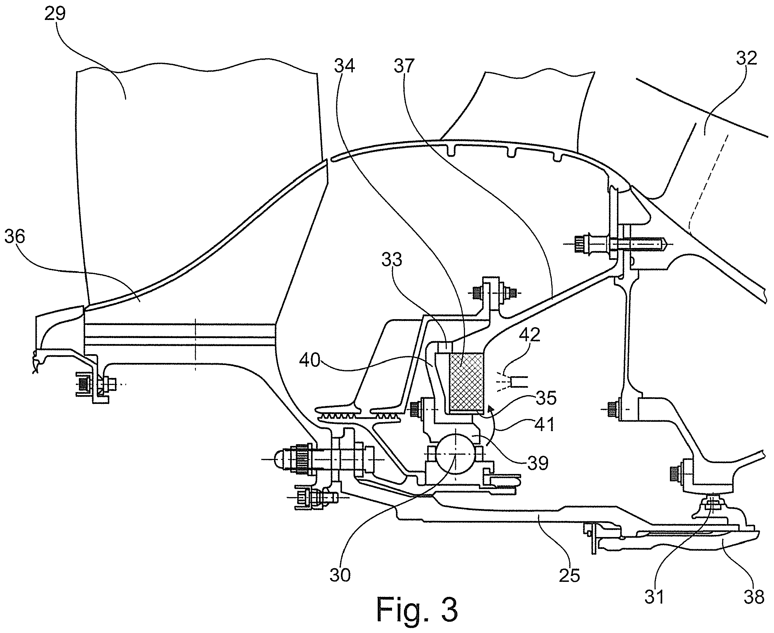

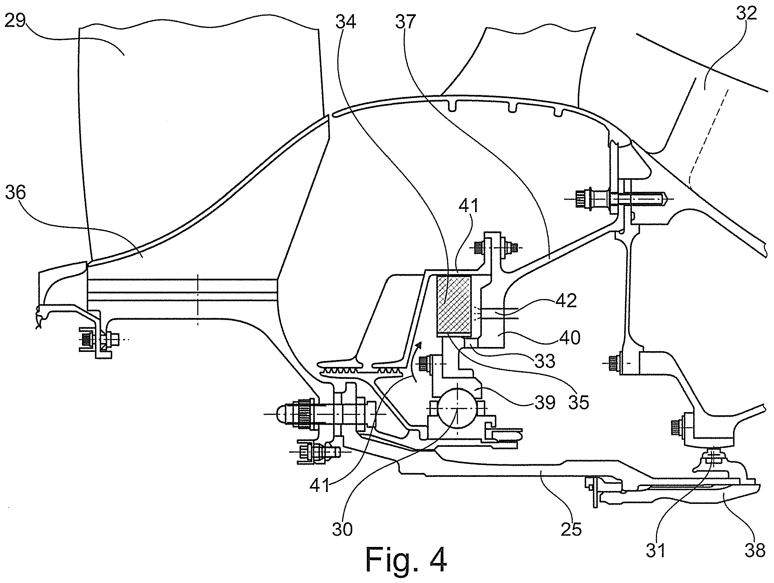

Die Fig. 3 und 4 zeigen Ausführungsbeispiele der erfindungsgemäßen Lösung. Bei diesen Ausführungsbeispielen wird jeweils parallel wirkend zu der jeweiligen Sollbruchstelle 33 zumindest ein Stoßdämpfungselement 34 angeordnet. Dieses kann beispielsweise als Ring ausgebildet sein. Es ist jedoch auch möglich, das Stoßdämpfungselement durch einen zumindest einmal unterbrochenen Ring oder einzelne am Umfang angeordnete Stoßdämpfungselemente auszubilden.

Bei dem in Fig. 3 gezeigten Ausführungsbeispiel ist das Stoßdämpfungselement 34 direkt in die Fanlagerstruktur 37 integriert, welche mit der Sollbruchstelle 33 versehen ist. Zwischen dem Stoßdämpfungselement 34 und einem radial innenliegenden Bereich des Kopplungselements 40 ist ein radialer Spalt 35 vorgesehen.

Bei dem in Fig. 4 gezeigten Ausführungsbeispiel ist das Stoßdämpfungselement 34 zwischen einem radial inneren Bereich des Kopplungselements 40 und einem mit der Fanlagerstruktur 37 verbundenen Lagerelement 41 angeordnet.

Die Fig. 3 und 4 zeigen weiterhin in schematischer Darstellung eine Kühlung des Stoßdämpfungselementes 34 mit Überlauföl 41 des Fanlagers 30 und alternativ eine Kühlung mit Sprühöl 42.

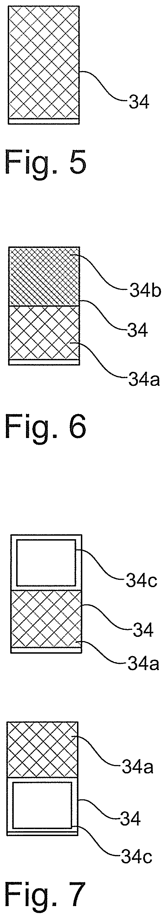

Die Figuren 5 bis 7 zeigen jeweils Schnittansichten von Ausführungsbeispielen des erfindungsgemäßen Stoßdämpfungselements 34. Die Fig. 5 zeigt ein Stoßdämpfungselement 34, welches über seinen Querschnitt ein gleiches Material aufweist. In Fig. 6 ist ein Ausführungsbeispiel gezeigt, welches Stoßdämpfungselemente 34a und 34b mit unterschiedlicher Dämpfungscharakteristik umfasst. Die Fig. 7 zeigt Variationen mit einem Stoßdämpfungselement 34a und einem Bauelement 34c, dessen Material plastisch verformbar ist. Das Stoßdämpfungselement 34a ist dabei weicher als das Stoßdämpfungselement 34b. Alternativ können die Stoßdämpfungselemente 34a und 34b als unterschiedlich stark verpresste Bereiche des Stoßdämpfungselements 34 ausgebildet sein.

### Bezugszeichenliste

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Fanwelle
- 26: Kompressortrommel oder -scheibe
- 27: Turbinenrotornabe
- 28: Auslasskonus
- 29: Fanschaufel
- 30: Fanlager
- 31: Lager
- 32: Triebwerksstruktur
- 33: Sollbruchstelle
- 34: Stoßdämpfungselement
- 34a: Stoßdämpfungselement mit erster Dämpfungscharakteristik
- 34b: Stoßdämpfungselement mit weiterer Dämpfungscharakteristik
- 34c: plastisch deformierendes Bauelement
- 35: Spalt
- 36: Fanrotor
- 37: Fanlagerstruktur
- 38: Niederdruckwelle
- 39: äußerer Lagerring
- 40: Kopplungselement
- 41: Überlauföl aus dem Fanlager
- 42: Sprühöl zur Kühlung des Stoßdämpfungselementes

## Patentansprüche

1. Fluggasturbinentriebwerk mit einem an einer Fanwelle (25) gelagerten, mehrere Fanschaufeln (29) umfassenden Fan (12), wobei die Fanwelle (25) mittels eines in Strömungsrichtung vorderen Fanlagers (30) und mittels eines hinteren Lagers (31) an einer Triebwerksstruktur (32) gelagert ist, wobei im Bereich des vorderen Fanlagers (30) zumindest eine Sollbruchstelle (33) ausgebildet ist, wobei parallel wirkend zu der Sollbruchstelle (33) zumindest ein als Metallgewebedämpfer ausgebildetes Stoßdämpfungselement (34) angeordnet ist, **dadurch gekennzeichnet, dass** das Stoßdämpfungselement mit einem radialen Spalt angeordnet ist,
- wobei dem Stoßdämpfungselement (34) Mittel zur Zuführung von Öl zur Kühlung des Stoßdämpfungselements (34) zugeordnet sind, und
- wobei die Mittel zur Zuführung von Überlauföl (41) aus dem Fanlager (30) oder durch Sprühöl (42) ausgebildet sind.

2. Fluggasturbinentriebwerk nach Anspruch 1, **dadurch gekennzeichnet, dass** die Sollbruchstelle (33) und das Stoßdämpfungselement (34) an der radial äußeren, der Triebwerksstruktur (32) zugewandten Seite des Fanlagers (30) angeordnet sind.

3. Fluggasturbinentriebwerk nach einem der Ansprüche 1 oder 2, **dadurch gekennzeichnet, dass** das Stoßdämpfungselement (34) als Kombination zweier Stoßdämpfungselemente mit unterschiedlicher Dämpfungscharakteristik (34a und 34b) ausgebildet ist.

4. Fluggasturbinentriebwerk nach einem der Ansprüche 1 oder 2, **dadurch gekennzeichnet, dass** das Stoßdämpfungselement (34) als einstückiges Stoßdämpfungselement (34), welches zwei Bereiche mit unterschiedlicher Dämpfungscharakteristik (34a und 34b) aufweist, ausgebildet ist.

5. Fluggasturbinentriebwerk nach einem der Ansprüche 1 oder 2, **dadurch gekennzeichnet, dass** das Stoßdämpfungselement (34) als Kombination eines Stoßdämpfungselementes (34a) mit einem plastisch deformierenden Bauelement (34c) ausgebildet ist.

6. Fluggasturbinentriebwerk nach einem der Ansprüche 1 bis 5, **dadurch gekennzeichnet, dass** der radiale Spalt (35) zwischen dem Fanlager (30) und dem Stoßdämpfungselement (34) ausgebildet ist.

7. Fluggasturbinentriebwerk nach Anspruch 6, **dadurch gekennzeichnet, dass** der Spalt (35) mit einer Breite von 1 mm bis 6 mm, bevorzugt 2 mm bis 5 mm, und besonders vorteilhaft mit einer Breite von 3 mm ausgebildet ist.

8. Fluggasturbinentriebwerk nach Anspruch 6, **dadurch gekennzeichnet, dass** der Spalt (35) mit einer Breite von 6 mm bis 12 mm ausgebildet ist.

9. Fluggasturbinentriebwerk nach einem der Ansprüche 1 bis 8, **dadurch gekennzeichnet, dass** im Bereich des Stoßdämpfungselements (34), der Fanlagerstruktur (37) oder der Triebwerkstruktur (32) zumindest ein Beschleunigungsaufnehmer angeordnet ist, welcher mit einer Triebwerkssteuerung verbunden ist.

10. Fluggasturbinentriebwerk nach einem der Ansprüche 1 bis 9, **dadurch gekennzeichnet, dass** das Stoßdämpfungselement (34) als Ring, unterbrochener Ring, oder durch mehrere, um den Umfang verteilt angeordnete Stoßdämpfungselemente ausgebildet ist.

## Claims

1. Aircraft gas-turbine engine having a fan (12) mounted on a fan shaft (25) and including several fan blades (29), where the fan shaft (25) is mounted on an engine structure (32) by means of an upstream fan bearing (30), when seen in the flow direction, and a downstream bearing (31), where at least one predetermined breaking point (33) is provided in the area of the upstream fan bearing (30), where at least one shock-absorbing element (34) designed as metal fabric damper is arranged to have a parallel effect relative to the predetermined breaking point (33), **characterized in that** the shock-absorbing element is arranged at a radial gap,
- where means for the supply of oil for cooling the shock-absorbing element (34) are assigned to the shock-absorbing element (34), and
- where the means for the supply of overflow oil (41) from the fan bearing (30) or of spray oil (42) are provided.

2. Aircraft gas-turbine engine in accordance with Claim 1, **characterized in that** the predetermined breaking point (33) and the shock-absorbing element (34) are arranged on the radially outer side of the fan bearing (30) facing the engine structure (32).

3. Aircraft gas-turbine engine in accordance with one of the Claims 1 or 2, **characterized in that** the shock-absorbing element (34) is designed as a combination of two shock-absorbing elements with differing damping characteristics (34a and 34b).

4. Aircraft gas-turbine engine in accordance with one of the Claims 1 or 2, **characterized in that** the shock-absorbing element (34) is designed as a one-piece shock-absorbing element (34), which has two areas of differing damping characteristics (34a and 34b).

5. Aircraft gas-turbine engine in accordance with one of the Claims 1 or 2, **characterized in that** the shock-absorbing element (34) is designed as a combination of a shock-absorbing element (34a) with a plastically deforming structural element (34c).

6. Aircraft gas-turbine engine in accordance with one of the Claims 1 to 5, **characterized in that** the radial gap (35) is provided between the fan bearing (30) and the shock-absorbing element (34).

7. Aircraft gas-turbine engine in accordance with Claim 6, **characterized in that** the gap (35) is provided with a width ranging from 1 mm to 6 mm, preferably from 2 mm to 5 mm and particularly advantageously with a width of 3 mm.

8. Aircraft gas-turbine engine in accordance with Claim 6, **characterized in that** the gap (35) is provided with a width ranging from 6 mm to 12 mm.

9. Aircraft gas-turbine engine in accordance with one of the Claims 1 to 8, **characterized in that** at least one acceleration sensor, which is connected to an engine control, is arranged in the area of the shock-absorbing element (34), the fan bearing structure (37) or the engine structure (32).

10. Aircraft gas-turbine engine in accordance with one of the Claims 1 to 9, **characterized in that** the shock-absorbing element (34) is designed as a ring, as an interrupted ring or as several shock-absorbing elements distributed over the circumference.

## Revendications

1. Moteur d'avion à turbine à gaz avec une soufflante (12) comprenant plusieurs pales de soufflante (29) et montée sur un arbre de soufflante (25), sachant que l'arbre de soufflante (25) est monté sur une structure du moteur (32) au moyen d'un palier de soufflante amont (30) dans le sens d'écoulement et au moyen d'un palier aval (31), sachant que dans la zone du palier de soufflante amont (30) se trouve au moins un point destiné à la rupture (33), sachant qu'est disposé au moins un élément d'amortissement de chocs (34) sous forme d'amortisseur en tissu métallique et agissant parallèlement au point destiné à la rupture (33), **caractérisé en ce que** l'élément d'amortissement de chocs est arrangé à une fente radiale,
- sachant que sont affectés à l'élément d'amortissement de chocs (34) des moyens d'alimentation en huile servant à refroidir l'élément d'amortissement de chocs (34), et
- sachant que sont pourvus les moyens d'alimentation en huile de trop-plein (41) provenant du palier de soufflante (30) ou en huile de pulvérisation (42).

2. Moteur d'avion à turbine à gaz selon la revendication n° 1, **caractérisé en ce que** le point destiné à la rupture (33) et l'élément d'amortissement de chocs (34) sont disposés sur le côté radialement extérieur du palier de soufflante (30) et faisant face à la structure du moteur (32).

3. Moteur d'avion à turbine à gaz selon une des revendications n° 1 ou n° 2, **caractérisé en ce que** l'élément d'amortissement de chocs (34) est conçu en tant que combinaison de deux éléments d'amortissement de chocs aux caractéristiques d'amortissement différentes (34a et 34b).

4. Moteur d'avion à turbine à gaz selon une des revendications n° 1 ou n° 2, **caractérisé en ce que** l'élément d'amortissement de chocs (34) est conçu sous la forme d'un élément d'amortissement de chocs (34) monobloc qui présente deux zones aux caractéristiques d'amortissement différentes (34a et 34b).

5. Moteur d'avion à turbine à gaz selon une des revendications n° 1 ou n° 2, **caractérisé en ce que** l'élément d'amortissement de chocs (34) est conçu en tant que combinaison entre un élément d'amortissement de chocs (34a) et un élément structurel (34c) se déformant plastiquement.

6. Moteur d'avion à turbine à gaz selon une des revendications n° 1 à n° 5, **caractérisé en ce qu'**est constituée la fente radiale (35) entre le palier de soufflante (30) et l'élément d'amortissement de chocs (34).

7. Moteur d'avion à turbine à gaz selon la revendication n° 6, **caractérisé en ce que** la fente (35) présente une largeur comprise entre 1 mm et 6 mm, de préférence entre 2 mm et 5 mm et notamment la largeur avantageuse de 3 mm.

8. Moteur d'avion à turbine à gaz selon la revendication n° 6, **caractérisé en ce que** la fente (35) présente une largeur comprise entre 6 mm et 12 mm.

9. Moteur d'avion à turbine à gaz selon une des revendications n° 1 à n° 8, **caractérisé en ce qu'**au moins un enregistreur d'accélération est disposé dans la zone de l'élément d'amortissement de chocs (34), de la structure du palier de soufflante (37) ou de la structure du moteur (32), lequel enregistreur d'accélération est relié à une commande du moteur.

10. Moteur d'avion à turbine à gaz selon une des revendications n° 1 à n° 9, **caractérisé en ce que** l'élément d'amortissement de chocs (34) est conçu sous forme d'anneau, d'anneau interrompu ou de plusieurs éléments d'amortissement de chocs répartis sur la circonférence.
